# FASCICULE DE BREVET EUROPEEN

(11) **EP 3 728 958 B1**
(45) Date de publication et mention de la délivrance du brevet: **24.11.2021**
(21) Numéro de dépôt: 18847236.9
(22) Date de dépôt: 20.12.2018
(51) Int. Cl.: F24F 5/00, F24F 6/04, F24F 110/12, F24F 110/22, F24F 110/32

(54) **INSTALLATION DE RAFRAÎCHISSEMENT URBAIN**
STADTWÄRMEENTLASTUNGSANLAGE
URBAN HEAT RELIEF INSTALLATION

(30) Priorité: 21.12.2017 FR 1762871
(43) Date de publication de la demande: 28.10.2020
(73) Titulaire: Veolia Environnement, 75008 Paris (FR)
(72) Inventeur: MAILLARD, Philippe, 78950 Gambais (FR); TERZIAN, Nicolas, 78300 Poissy (FR); HESTIN, Eric, 95560 Chauvry (FR)
(74) Mandataire: Cabinet Beau de Loménie
(86) Numéro de dépôt international: PCT/FR2018/053490
(87) Numéro de publication internationale: WO 2019/122770

(56) Documents cités:
- EP-A1- 2 626 643
- CN-U- 203 049 402
- GB-A- 2 515 378
- JP-A- 2004 197 440
- US-A- 6 161 362
- US-A1- 2003 177 703

## Description

### DOMAINE DE L'INVENTION

La présente invention concerne une installation de rafraichissement urbain permettant de lutter contre le phénomène d'ilot de chaleur urbain et d'améliorer le confort des piétons des espaces publics et privés.

### ETAT DE LA TECHNIQUE ANTERIEURE

Les ilots de chaleur urbains sont des élévations localisées des températures, particulièrement des températures maximales diurnes et nocturnes, enregistrées en milieu urbain par rapport aux zones rurales ou forestières voisines. Ce phénomène est dû d'une part aux activités humaines plus intenses qui réchauffent l'environnement urbain, et d'autre part à l'urbanisation du milieu privilégiant des matériaux à faible albédo, absorbant le rayonnement solaire, et dont les nombreux bâtiments piègent les rayonnements thermiques et limite le refroidissement éolien.

Ce phénomène s'intensifiant de plus en plus avec l'urbanisation croissante des territoires, des réflexions sont actuellement menées pour lutter contre ce phénomène d'ilot de chaleur : des stratégies et des plans d'action ont ainsi déjà fait l'objet de propositions pour atténuer ce phénomène.

Ainsi, outre la mise en place d'espaces verts et la transformation des usages urbains, une piste explorée à ce jour est le refroidissement par l'utilisation de l'eau. Ainsi, une solution désormais classique, mais nécessitant une grande quantité d'eau potable, est la brumisation des espaces piétonniers. Un refroidissement peut également être obtenu par humidification des chaussées. En effet, l'évaporation de l'eau ainsi répandue sur les chaussées entraîne un refroidissement de la surface de la chaussée et une sensation de fraicheur pour les piétons. Le document EP 2 626 643 illustre que ce principe existe également pour les bâtiments.

Une autre solution explorée pour des surfaces piétonnes telles des trottoirs ou des places est l'humidification par des canalisations sous-terraines de pavés évaporatifs ayant des propriétés particulières de retenue d'eau. Le document JP 2004 197 440 illustre par un exemple un trottoir équipé de tels pavés.

Toutefois, à ce jour, ces installations de rafraichissement sont déclenchées soit manuellement, soit automatiquement sur la base d'une simple sonde de température. Or, en milieu urbain, on constate fréquemment une distorsion, dans un sens ou dans l'autre selon les conditions climatiques, entre la sensation de chaleur ressentie par les piétons et la température réelle de l'air ambiant. En conséquence, il peut arriver que les installations de rafraichissement connues ne se déclenchent pas alors les piétons souffrent de chaleur ou bien qu'elles se déclenchent inopinément lorsque cela n'est pas utile, gaspillant ainsi de l'eau.

Il existe donc un réel besoin pour une installation de rafraichissement urbain permettant de lutter contre le phénomène d'ilot de chaleur urbain et d'améliorer le confort des piétons qui soit dépourvue, au moins en partie, des inconvénients inhérents aux configurations connues précitées.

### PRESENTATION DE L'INVENTION

La présente invention concerne une installation de rafraichissement urbain telle que définie en revendication 1. Une telle installation comprend notamment un revêtement de surface à rétention d'eau, disposé au niveau d'une zone à rafraichir, un réseau de distribution d'eau, un système d'alimentation en eau, connecté au réseau de distribution d'eau, un système de pilotage configuré pour commander le système d'alimentation en eau afin d'autoriser ou d'interdire l'alimentation en eau du réseau de distribution d'eau, dans laquelle le système de pilotage comprend au moins deux capteurs distincts configurés pour mesurer deux paramètres climatiques différents de l'environnement de l'installation.

Grâce à un tel système de pilotage comprenant au moins deux capteurs distincts, il est possible de piloter l'installation de rafraîchissement de manière plus fiable en évaluant de manière plus fine l'utilité du rafraichissement afin d'augmenter le confort des piétons lorsque cela est souhaitable sans gaspiller de l'eau lorsque cela est superflu.

La présence d'une pluralité de capteurs permet également de suivre les variations des paramètres climatiques de l'environnement de l'installation, ce qui permet d'évaluer l'impact de l'installation sur le confort des piétons.

Dans certains modes de réalisation, le revêtement de surface à rétention d'eau comprend une pluralité de pavés évaporatifs à rétention d'eau. Il peut notamment s'agir de pavés céramiques ou de pavés associant du béton à une mousse de polystyrène, par exemple du type commercialisé par la société Taisei Rotec. Toutefois, il pourrait également s'agir de tout autre matériau hydrophile ayant une dureté suffisante pour former une chaussée ou un pavement.

Dans certains modes de réalisation, le réseau de distribution d'eau comprend au moins une canalisation perméable prévue sous le revêtement de surface à rétention d'eau. Le réseau de distribution est ainsi enterré et distribue l'eau au revêtement de surface à rétention d'eau par le dessous : on bénéficie alors d'une meilleure intégration de l'installation dans la voirie ; en outre, on réduit le risque de voir apparaitre de l'eau stagnante en surface du revêtement de surface à rétention d'eau. Cette canalisation perméable peut être notamment une canalisation perforée ou poreuse.

Dans certains modes de réalisation, le réseau de distribution d'eau comprend au moins une buse d'aspersion prévue en surface du revêtement de surface à rétention d'eau. Dans une telle configuration, la surface du revêtement de surface à rétention d'eau est aspergée depuis le haut : les buses peuvent notamment être intégrées dans la bordure d'un trottoir ou encore directement dans le revêtement de surface à rétention d'eau.

Dans certains modes de réalisation, l'installation comprend une couche perméable à l'eau prévue sous le revêtement à rétention d'eau. Une telle couche peut notamment accueillir le réseau de distribution d'eau et conduire l'eau jusqu'au revêtement de surface à rétention d'eau. Il peut notamment s'agir de mortier. Elle permet également de drainer le surplus d'eau présent dans le revêtement de surface à rétention d'eau après l'arrêt de l'installation.

Dans certains modes de réalisation, l'installation comprend une couche imperméable à l'eau prévue sous le réseau de distribution d'eau. Une telle couche est de préférence située sous la couche perméable lorsque cette dernière existe. Il peut notamment s'agir d'une membrane imperméable et/ou d'une dalle en béton. Elle permet de retenir l'eau distribuée par le réseau de distribution d'eau afin que cette dernière ne se perde pas dans le sous-sol.

Dans certains modes de réalisation, l'installation comprend au moins une source d'eau connectée au système d'alimentation en eau.

Dans certains modes de réalisation, au moins une source d'eau est d'origine pluviale. Ceci permet ainsi de valoriser l'eau pluviale en cycle court, limitant ainsi le recours à de l'eau potable.

Dans certains modes de réalisation, l'installation comprend au moins un avaloir de voirie formant une source d'eau connectée au système d'alimentation en eau. Cet avaloir peut notamment être du type dépolluant comme par exemple ceux décrits dans la demande de brevet FR 13 60706.

Dans certains modes de réalisation, l'installation comprend au moins un avaloir de toiture formant une source d'eau connectée au système d'alimentation en eau.

De manière plus générale, dans certains modes de réalisation, l'installation comprend un système de stockage des eaux pluviales formant une source d'eau connectée au système d'alimentation en eau. Il va toutefois de soi que toutes les sources d'eaux non potables sont envisageables. Ainsi, l'installation peut comprendre une source d'eau non potable connectée au système d'alimentation en eau (30) d'au moins un type choisi parmi les suivants : eaux pluviales, réseaux d'eau brute, eaux de forage, eaux d'exhaure ; et eaux usées recyclés. Il est également possible de prélever de l'eau issue de bassins, naturels ou artificiels, fontaines ou encore cours d'eau.

Dans certains modes de réalisation, au moins une source d'eau est une source d'eau potable. Elle peut notamment provenir d'un réseau d'eau potable urbain. Une telle source d'eau potable peut par exemple servir d'appoint lorsqu'une eau non potable, par exemple d'origine pluviale, n'est pas disponible en quantité suffisante.

Dans certains modes de réalisation, le système d'alimentation en eau comprend au moins une pompe.

Dans certains modes de réalisation, le système d'alimentation en eau comprend au moins un réservoir de stockage. Ceci permet d'accumuler de l'eau, tout particulièrement de l'eau non potable, en vue du fonctionnement de l'installation.

Dans certains modes de réalisation, le système d'alimentation en eau comprend au moins un dispositif de traitement. Ce dispositif de traitement peut notamment comprendre un dispositif de filtration, un dispositif d'adoucissement et/ou un dispositif de désinfection Par exemple, le dispositif de filtration peut comprendre au moins un filtre à disque. Par exemple, le dispositif de désinfection peut comprendre au moins une lampe UV. Un tel dispositif de filtration permet d'éliminer certaines particules afin de réduire le risque d'encrassement du revêtement de surface à rétention d'eau. Un tel dispositif d'adoucissement permet d'éviter la dureté de l'eau et l'entartrage des pavés. Un tel dispositif de désinfection permet d'éviter un éventuel risque sanitaire en cas d'utilisation d'eau non potable.

Dans certains modes de réalisation, l'installation comprend un système de vidange configuré pour vidanger le réseau de distribution d'eau lorsque cela est souhaité. Ceci permet notamment du purger l'installation avant l'hiver afin de réduire un risque d'endommagement par le gel.

Dans certains modes de réalisation, le système de pilotage comprend un automate. Cet automate permet de relever les valeurs mesurées par les capteurs et de commander le système d'alimentation en eau en fonction de ces dernières et de routines préprogrammées. De préférence, il permet également de communiquer avec un poste de supervision distant.

Dans certains modes de réalisation, l'installation comprend un système d'alimentation électrique autonome, par exemple des cellules photovoltaïques. Toutefois, l'installation peut également être connectée à un réseau de distribution électrique urbain.

Dans certains modes de réalisation, le système de pilotage comprend au moins un capteur de température de surface configuré pour mesurer la température de surface du sol. En effet, la température de surface du sol est un paramètre climatique important à prendre en compte pour affiner l'évaluation de la sensation de chaleur ressentie par les piétons : une part importante de cette sensation de chaleur est en effet liée au rayonnement thermique du sol, ce dernier ayant une contribution importante dans la température moyenne de rayonnement. Les expérimentations des inventeurs ont en particulier révélé une corrélation linéaire forte, en milieu urbain, entre la température du sol d'une zone et l'indice UTCI de cette même zone.

Dans certains modes de réalisation, au moins un capteur de température de surface est du type pyromètre optique, par exemple à infra-rouges. Un tel capteur permet de mesurer la température d'une surface à distance, sans contact avec la surface en question : ceci facilite donc son installation, aucun aménagement n'étant nécessaire au niveau de cette surface. Ceci permet en outre de réduire le risque de dégradation du capteur par rapport au cas d'un capteur intégré au revêtement à rétention d'eau

Dans certains modes de réalisation, le système de pilotage comprend au moins un capteur de température de surface configuré pour mesurer la température de surface du sol dans la zone à rafraichir.

Dans certains modes de réalisation, le système de pilotage comprend au moins un capteur de température de surface configuré pour mesurer la température de surface du sol dans une zone de référence dépourvue du revêtement de surface à rétention d'eau et jouxtant la zone à rafraichir. Le suivi de la température du sol dans une zone de référence voisine permet d'évaluer le rafraichissement effectivement apporté par l'installation car elle permet d'évaluer l'indice UTCI dans la zone de référence via la corrélation entre l'indice UTCI et température de sol. Elle peut également constituer un paramètre de pilotage de l'installation afin de déclencher ou non l'alimentation en eau. En effet, si la différence d'UTCI entre la zone à rafraîchir et la zone de référence est trop faible, il faut déclencher un cycle d'arrosage

Dans certains modes de réalisation, le système de pilotage comprend au moins un capteur de température ambiante configuré pour mesurer la température de l'air ambiant. La température de l'air ambiant influe en effet sur la température ressentie par les piétons.

Dans certains modes de réalisation, au moins un capteur de température ambiante est du type thermomètre sous abri.

Dans certains modes de réalisation, le système de pilotage comprend au moins un capteur de température de globe noir configuré pour mesurer la température de globe noir locale. La température de globe noir, liée à la température moyenne de rayonnement, ou température moyenne radiante, ou encore température radiative moyenne, découle des rayonnements thermiques locaux et influe sur la température ressentie par les piétons.

Dans certains modes de réalisation, au moins un capteur de température de globe noire est un thermomètre à globe noir.

Dans certains modes de réalisation, le système de pilotage comprend au moins un capteur d'humidité configuré pour mesurer l'humidité relative locale. L'humidité relative influe en effet sur la température ressentie par les piétons.

Dans certains modes de réalisation, au moins un capteur d'humidité est un hygromètre.

Dans certains modes de réalisation, le système de pilotage comprend au moins un capteur de vitesse d'air configuré pour mesurer la vitesse locale de l'air. La vitesse de l'air influe en effet sur la température ressentie par les piétons.

Dans certains modes de réalisation, au moins un capteur de vitesse d'air est un anémomètre.

Dans certains modes de réalisation, au moins un capteur, et de préférence chaque capteur, est disposé au sein d'une cage de protection. Une telle cage de protection joue un rôle pédagogique en rendant visible les capteurs de l'installation tout en limitant le risque de vandalisme. De préférence, tous les capteurs sont disposés au sein d'une même cage de protection.

Dans certains modes de réalisation, tous les capteurs sont disposés dans la zone à rafraichir. Il est ainsi possible d'avoir une évaluation précise de la température ressentie dans la zone à rafraichir, ce qui permet d'affiner le pilotage de l'installation. En outre, en cas d'emploi d'un capteur optique, il est possible de mesurer à distance la température de la zone de référence depuis la zone à rafraichir : on regroupe ainsi tous les capteurs, ce qui facilite l'intégration de ces derniers. Toutefois, il va de soi que chaque zone pourrait être équipée de ses propres capteurs, notamment parmi ceux énumérés ci-dessus.

Dans certains modes de réalisation, le système de pilotage comprend une horloge. Cette horloge peut également inclure un calendrier. Ceci offre d'autres options de pilotage pour l'installation.

Dans certains modes de réalisation, le système de pilotage est configuré pour commander le système d'alimentation en fonction d'un indice de confort calculé sur la base d'au moins deux paramètres parmi les suivants : température ambiante ; température moyenne de rayonnement ; température du sol ; humidité relative ; vitesse de l'air. Les inventeurs ont en effet établi que ces paramètres climatiques jouaient un rôle dans la sensation de chaleur ressentie par les piétons en milieu urbain : ils permettent ainsi d'affiner le pilotage de l'installation.

Dans certains modes de réalisation, ledit indice de confort est l'indice UTCI. L'indice UTCI (en anglais « Universal Thermal Climate Index », traduit en français par « indice universel du climat thermique ») est un indicateur de mesure créé par la Société Internationale de Biométéorologie : elle est fonction de la température de l'air, de la température moyenne de rayonnement, de l'humidité relative et de la vitesse de l'air. Toutefois, d'autres indices de confort pourraient être utilisés, par exemple la température au thermomètre-globe mouillé (WBGT pour Wet Bulb Globe Temperature), l'indice humidex ou encore l'indice de chaleur.

Dans certains modes de réalisation, le système de pilotage est configuré pour autoriser l'alimentation en eau lorsque l'indice UTCI de la zone à rafraichir dépasse 26°C, de préférence 30°C Par ailleurs, les expérimentations des inventeurs ont révélé une corrélation linéaire forte, en milieu urbain, entre la température du sol d'une zone et l'indice UTCI de cette même zone. Il est donc possible d'évaluer l'indice UTCI dans la zone de référence par extrapolation de la température de sol dans cette zone, ce qui permet d'évaluer l'impact de la solution sur l'indice UTCI local.

Selon l'invention, le système de pilotage est configuré pour commander le système d'alimentation en fonction de la température du sol dans la zone à rafraichir et de la température du sol dans une zone de référence dépourvue du revêtement de surface à rétention d'eau et jouxtant la zone à rafraîchir. En effet, si les températures de sol de la zone à rafraîchir et de la zone de référence redeviennent proches, cela signifie que l'eau s'est évaporée, et qu'il est nécessaire de déclencher un nouveau cycle d'humidification.

Dans certains modes de réalisation, le système de pilotage est configuré pour autoriser l'alimentation en eau lorsque la température du sol de la zone de référence dépasse 30°C, de préférence 35°C, et que la différence entre la température du sol de la zone de référence et la température du sol de la zone à rafraîchir est inférieure à 15°C. En effet, si les températures de sol de la zone à rafraîchir et de la zone de référence redeviennent proches, cela signifie que l'eau s'est évaporée, et qu'il est nécessaire de déclencher un nouveau cycle d'humidification.

Dans certains modes de réalisation, le système de pilotage est configuré pour autoriser l'alimentation en eau durant une période d'alimentation comprise entre 2 et 30 minutes.

Dans certains modes de réalisation, le système de pilotage est configuré pour maintenir une période de non-alimentation comprise entre 2 et 60 minutes, entre deux périodes d'alimentation. On évite ainsi de saturer le sol en eau et de gaspiller l'eau en apportant une quantité d'eau adaptée.

Dans certains modes de réalisation, le système de pilotage est configuré pour déclencher un cycle de rafraîchissement comprenant une alternance d'au moins deux périodes d'alimentation et d'au moins deux périodes de non-alimentation.

Les caractéristiques et avantages précités, ainsi que d'autres, apparaîtront à la lecture de la description détaillée qui suit, d'exemples de réalisation de l'installation proposée. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est un schéma de fonctionnement d'une installation de rafraichissement selon l'invention.
La FIG 2 est une vue en perspective d'une partie de cette installation.
La FIG 3 est un logigramme représentant un premier exemple de routine de pilotage de cette installation; cet exemple n'est pas conforme à l'invention.
La FIG 4 est un logigramme représentant un deuxième exemple de routine de pilotage de cette installation; cet exemple est conforme à l'invention.
La FIG 5 est un logigramme représentant un troisième exemple de routine de pilotage de cette installation; cet exemple est conforme à l'invention.

### DESCRIPTION DETAILLEE D'EXEMPLE(S) DE REALISATION

Afin de rendre plus concret l'exposé, un exemple d'installation de rafraichissement est décrit en détail ci-après, en référence aux dessins annexés. Il est rappelé que l'invention ne se limite pas à cet exemple.

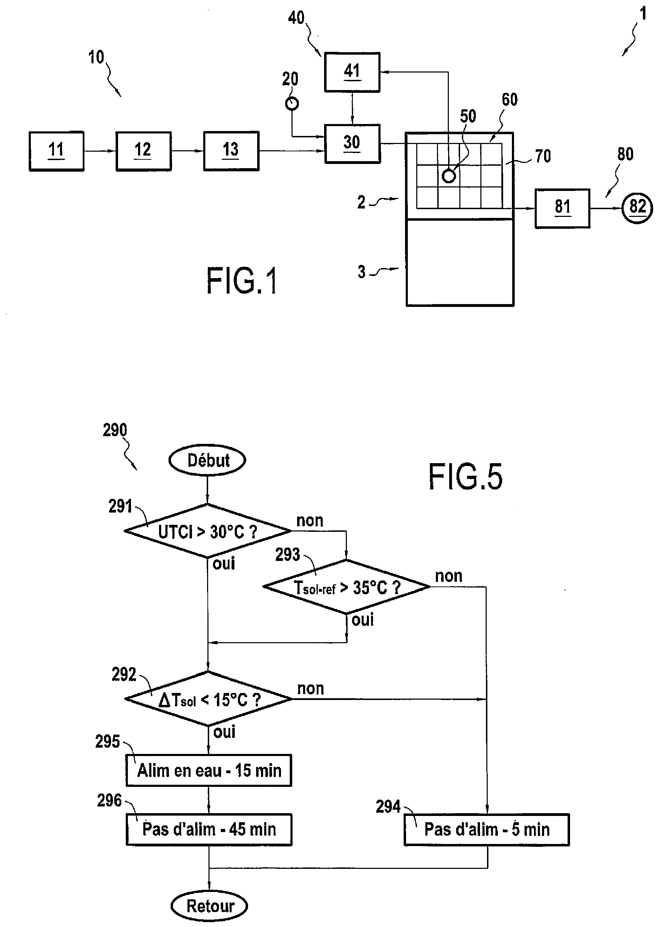

La FIG 1 représente schématiquement les principaux organes d'un exemple d'installation de rafraichissement 1 selon l'invention.

L'installation de rafraichissement 1 comprend une source d'eau non potable10, une source d'eau potable 20, un système d'alimentation 30, un système de pilotage 40, un réseau de distribution 60 et un système de vidange 80. Le réseau de distribution 60 est prévu au niveau d'une zone à rafraichir2 munie d'un revêtement de surface à rétention d'eau 70 ; cette zone à rafraichir2 jouxte une zone de référence 3.

Dans le présent exemple, la source non potable 10 est d'origine pluviale : elle comprend ainsi un avaloir de voirie 11 recueillant les eaux ruisselant sur la chaussée durant les épisodes pluvieux. Ces eaux pluviales sont traitées à l'aide d'un dispositif de traitement 12 : ce dispositif de traitement 12 comprend un dispositif de filtration, visant en particulier à retenir les macro-déchets et les grosses particules, un dispositif d'adoucissement et un dispositif de désinfection. L'eau pluviale ainsi traitée est ensuite stockée dans un réservoir 13.

Le système d'alimentation 30 comprend une pompe puisant dans le réservoir 13 d'eau non potable et alimentant le réseau de distribution 60. Elle est commandée par le système de pilotage 40. La source d'eau potable 20, par exemple une canalisation de branchement d'un réseau d'eau potable urbain, est également connectée au système d'alimentation 30 : ainsi, lorsque le réservoir 13 d'eau non potable est vide, le système d'alimentation 30 peut puiser de l'eau dans la source d'eau potable 20. Le système d'alimentation 30 est ainsi configuré pour privilégier la source d'eau non potable 10 et n'utiliser la source d'eau potable 20 que lorsque la quantité d'eau non potable dans le réservoir 13 est insuffisante. Par ailleurs, le système d'alimentation 30 peut comprendre son propre dispositif de traitement qui peut comprendre une filtration, un adoucissement et une désinfection, par exemple par UV, ainsi que son propre réservoir.

Le système de pilotage 40 comprend un automate 41 et un ensemble de capteurs 50 installés dans la zone à rafraichir2. Comme cela sera décrit ci-après, l'automate 41 reçoit les informations provenant de l'ensemble des capteurs 50 et commande le système d'alimentation 30 en fonction de ces derniers et de routines de pilotage préprogrammées.

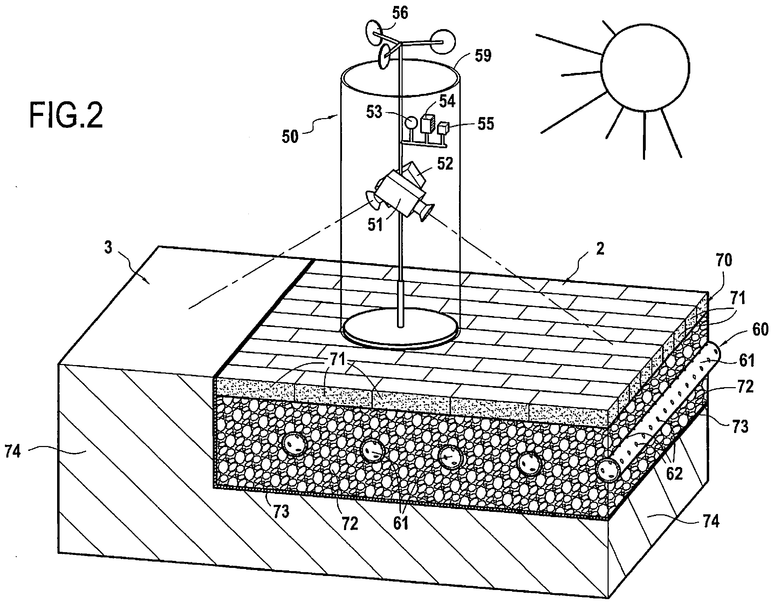

L'aménagement de la zone à rafraîchir 2 et de la zone de référence 3 est mieux visible sur la FIG 2. Dans la zone à rafraichir 2, de la surface vers le sous-sol, le sol comprend un pavement formé de pavés évaporatifs à rétention d'eau 71, formant le revêtement de surface à rétention d'eau 70, une couche perméable de mortier 72, une membrane imperméable 73 et une dalle de béton 74.

Le sol de la zone de référence 3 est pour sa part formé d'une simple dalle de béton 74.

Le réseau de distribution 60 comprend une pluralité de canalisation 61 enterrées dans la couche perméable 72 de la zone à rafraichir2, sous les pavés évaporatifs à rétention d'eau 71. Les canalisations 61 sont munies de perforations 62 : ainsi, lorsque le système d'alimentation 30 injecte de l'eau dans le réseau de distribution 60, cette eau s'infiltre dans toute la couche perméable 72 sous les pavés évaporatifs à rétention d'eau 71.

Dans cet exemple, ces pavés à rétention d'eau 71 sont des pavés en céramique du type cera-cool founi par la société Taisei Rotec. Ils ont la propriété d'absorber et de retenir l'eau apportée par le réseau de distribution 60 : dès lors, la surface du pavement 70 reste humide, ce qui refroidit le sol et réduit donc le rayonnement thermique émis par le sol. En outre, sous l'effet du rayonnement solaire, l'eau amenée en surface du pavement 70 s'évapore de manière continue, ce qui refroidit le sol en améliorant le confort des piétons qui se trouvent à proximité. On obtient ainsi une sensation de rafraichissement.

Par ailleurs, lorsque cela est souhaité, par exemple en fin de saison estivale, il est possible de purger le réseau de distribution 60 à l'aide du système de vidange 80. Ce système de vidange 80 comprend une vanne de vidange 81 située au point le plus aval du réseau de distribution 60 et connectée à un drain 82, par exemple une canalisation d'eaux usées ou d'eaux pluviales.

Le pilotage de l'installation de rafraichissement 1 va maintenant être décrit. Comme cela a été mentionné plus haut, le système de pilotage comprend un ensemble de capteurs 50 permettant de mesurer différents paramètres climatiques : tous ces capteurs sont réunis au sein d'une cage de protection 59 disposées au sein de la zone à rafraichir 2 (la cage de protection 59 est représentée symboliquement par une cylindre transparent sur la FIG 2 afin de ne pas gêner la visibilité de la figure). L'ensemble de capteurs 50 comprend : un premier pyromètre optique 51, dirigé vers le sol de la zone à rafraîchir 2 afin de mesurer la température de surface du sol de la zone à rafraîchir Tsol-raf ; un deuxième pyromètre optique 52, dirigé vers le sol de la zone de référence 3 afin de mesurer la température de surface du sol de la zone de référence Tsol-ref ; un thermomètre à globe noir 53 permettant de mesurer la température de globe noir Tg de la zone à rafraîchir 2 ; un thermomètre sous abri 54 permettant de mesurer la température de l'air ambiant Ta de la zone à rafraichir 2 ; un hygromètre 55 permettant de mesurer l'humidité relative RH de la zone à rafraichir 2 ; et un anémomètre 56 permettant de mesure la vitesse de l'air WS dans la zone à rafraichir 2.

Les mesures de tous ces capteurs 50 sont transmises à l'automate 41 du système de pilotage 40 : l'automate 41 exécute alors une ou plusieurs routines de pilotage et commande le système d'alimentation 30 en fonction de ces routines et des mesures de ces capteurs 50.

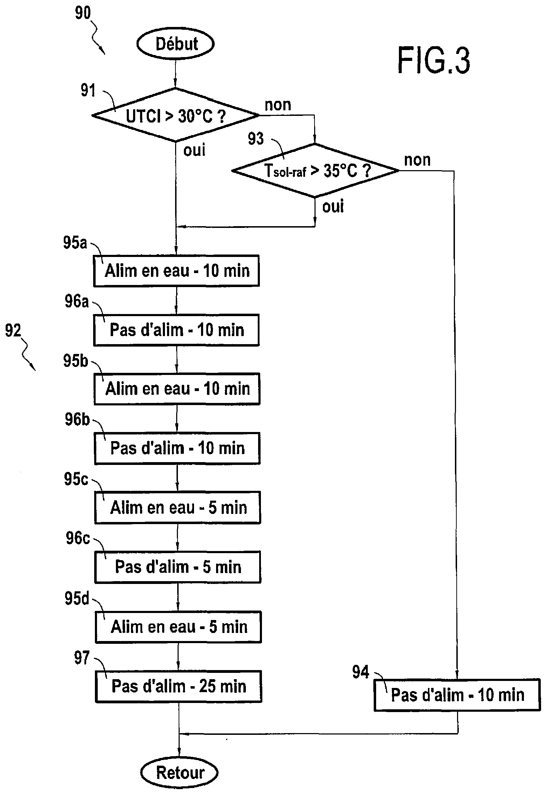

Dans le présent exemple, l'automate 41 exécute la routine 90 représentée à la FIG 3. Dans une première étape 91, l'automate 41 calcule l'indice UTCI de la zone à rafraîchir 2 en fonction de la température de l'air ambiant Ta, de la température de globe noir Tg, de l'humidité relative RH et de la vitesse de l'air WS de la zone à rafraîchir 2. Si l'indice UTCI ainsi calculé est supérieur à 30°C, l'automate déclenche un cycle de rafraichissement 92, sinon il bifurque vers l'étape 93.

Dans cette étape 93, l'automate 41 vérifie si la température du sol de la zone à rafraîchir Tsol-raf est supérieure à 35°C : si cela est le cas, il déclenche un cycle de rafraîchissement 92, sinon il rejoint l'étape 94 et maintient la pompe du système d'alimentation 30 à l'arrêt durant 10 minutes puis retourne au début de la routine 90.

Dans cet exemple, un cycle de rafraichissement 92 comprend une succession d'étapes d'alimentation et de non alimentation en eau, de durées décroissantes. Plus précisément le cycle de rafraichissement 92 comprend ici, chronologiquement, une première étape d'alimentation en eau 95a de 10 minutes, au cours de laquelle l'automate 41 commande la pompe du système d'alimentation 30 de sorte à alimenter le réseau de distribution 60 en eau pendant 10 minutes, une première étape de non alimentation d'eau 96a de 10 minutes, au cours de laquelle l'automate 41 maintient la pompe du système d'alimentation 30 à l'arrêt pendant 10 minutes, une deuxième étape d'alimentation en eau 95b de 10 minutes, une deuxième étape de non alimentation en eau 96b de 10 minutes, une troisième étape d'alimentation en eau 95c de 5 minutes, une troisième étape de non alimentation en eau 96c de 5 minutes et enfin une quatrième étape d'alimentation en eau 95d de 5 minutes.

Une fois le cycle de rafraichissement 92 terminé, l'automate 41 réalise une dernière étape de non alimentation en eau 97 de 25 minutes avant de retourner au début de la routine 90.

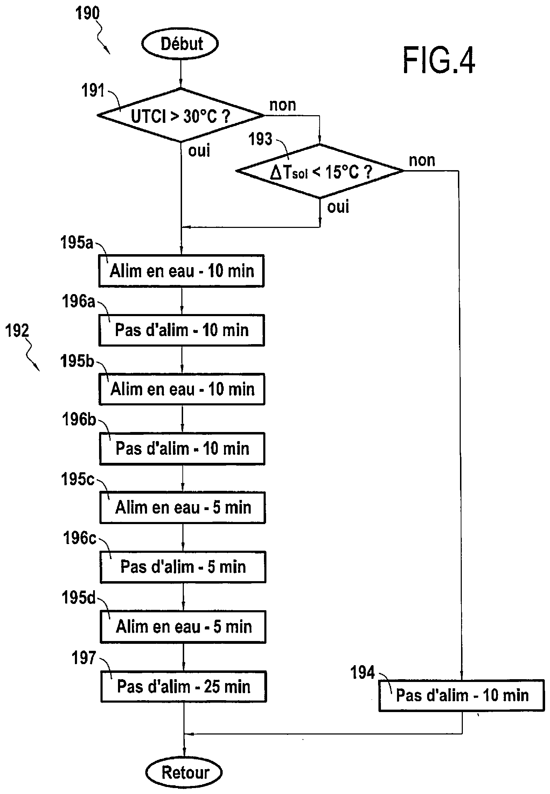

La FIG 4 illustre un deuxième exemple de routine de pilotage 190 pouvant être exécutée par l'automate 41. Dans une première étape 191, l'automate 41 calcule l'indice UTCI de la zone à rafraîchir 2 en fonction de la température de l'air ambiant Ta, de la température de globe noir Tg, de l'humidité relative RH et de la vitesse de l'air WS de la zone à rafraîchir 2. Si l'indice UTCI ainsi calculé est supérieur à 30°C, l'automate déclenche un cycle de rafraichissement 192, sinon il bifurque vers l'étape 193.

Dans cette étape 193, l'automate 41 vérifie si la différence ΔTsol entre la température du sol de la zone de référence Tsol-ref et la température du sol de la zone à rafraîchir Tsol-raf est inférieure à 15°C : si cela est le cas, il déclenche un cycle de rafraichissement 192, sinon il rejoint l'étape 194 et maintient la pompe du système d'alimentation 30 à l'arrêt durant 10 minutes puis retourne au début de la routine 190.

Dans ce deuxième exemple, le cycle de rafraichissement 192 est identique à celui du premier exemple.

Une fois le cycle de rafraichissement 192 terminé, l'automate 41 réalise une dernière étape de non alimentation en eau 197 de 25 minutes avant de retourner au début de la routine 90.

La FIG 5 illustre un troisième exemple de routine de pilotage 290 pouvant être exécutée par l'automate 41. Dans une première étape 291, l'automate 41 calcule l'indice UTCI de la zone à rafraîchir 2 en fonction de la température de l'air ambiant Ta, de la température de globe noir Tg, de l'humidité relative RH et de la vitesse de l'air WS de la zone à rafraîchir 2. Si l'indice UTCI ainsi calculé est supérieur à 30°C, l'automate progresse à l'étape 292, sinon il bifurque vers l'étape 293.

Dans cette étape 293, l'automate 41 vérifie si la température du sol de la zone de référence est supérieure à 35°C : si cela est le cas, il rejoint l'étape 292, sinon il bifurque à l'étape 294. Dans un tel cas, à l'étape 294, l'automate 41 maintient la pompe du système d'alimentation 30 à l'arrêt durant 5 minutes puis retourne au début de la routine 290.

A contrario, si l'automate 41 atteint l'étape 292, il vérifie si la différence ΔTsol entre la température du sol de la zone de référence Tsol-ref et la température du sol de la zone à rafraîchir Tsol-raf est inférieure à 15°C : si cela est le cas, il progresse jusqu'à l'étape 295 ; sinon il rejoint l'étape 294 et maintient donc la pompe du système d'alimentation 30 à l'arrêt durant 5 minutes puis retourne au début de la routine 290.

Dans l'étape 295, l'automate 41 commande la pompe du système d'alimentation 30 de sorte à alimenter le réseau de distribution 60 en eau : il maintient cette alimentation en eau 15 minutes puis progresse jusqu'à l'étape 296.

Dans l'étape 296, l'automate 41 commande la pompe du système d'alimentation 30 de sorte à interrompre l'alimentation en eau et maintient la pompe à l'arrêt 45 minutes avant de retourner au début de la routine 290.

Bien que la présente invention ait été décrite en se référant à des exemples de réalisation spécifiques, il est évident que des modifications et des changements peuvent être effectués sur ces exemples sans sortir de la portée de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Installation de rafraîchissement urbain, comprenant un revêtement de surface à rétention d'eau (70), disposé au niveau d'une zone à rafraîchir (2), un réseau de distribution d'eau (60), un système d'alimentation en eau (30), connecté au réseau de distribution d'eau (60), un système de pilotage (40) configuré pour commander le système d'alimentation en eau (30) afin d'autoriser ou d'interdire l'alimentation en eau du réseau de distribution d'eau (60), dans laquelle le système de pilotage (40) comprend au moins deux capteurs (50) distincts configurés pour mesurer deux paramètres climatiques différents de l'environnement de l'installation (1), et **caractérisée en ce que** le système de pilotage (40) est configuré pour commander le système d'alimentation (30) en fonction de la température du sol dans la zone à rafraîchir (2) et de la température du sol dans une zone de référence (3) dépourvue du revêtement de surface à rétention d'eau et jouxtant la zone à rafraîchir (2).

2. Installation selon la revendication 1, dans laquelle le revêtement de surface à rétention d'eau (70) comprend une pluralité de pavés évaporatifs à rétention d'eau (71).

3. Installation selon la revendication 1 ou 2, dans laquelle le réseau de distribution d'eau (60) comprend au moins une canalisation perméable (61) prévue sous le revêtement de surface à rétention d'eau (70).

4. Installation selon l'une quelconque des revendications 1 à 3, comprenant au moins une source d'eau non potable (10) connectée au système d'alimentation en eau (30) d'au moins un type choisi parmi les suivants : eaux pluviales, réseaux d'eau brute, eaux de forage, eaux d'exhaure ; et eaux usées recyclées.

5. Installation selon l'une quelconque des revendications 1 à 4, dans laquelle le système de pilotage (40) comprend au moins un capteur de température de surface (51) configuré pour mesurer la température de surface du sol.

6. Installation selon la revendication 5, dans laquelle au moins un capteur de température de surface (51) est du type pyromètre optique.

7. Installation selon la revendication 5 ou 6, dans laquelle le système de pilotage (40) comprend
au moins un capteur de température de surface (51) configuré pour mesurer la température de surface du sol dans la zone à rafraîchir (2), et
au moins un capteur de température de surface (52) configuré pour mesurer la température de surface du sol dans la zone de référence (3).

8. Installation selon l'une quelconque des revendications 1 à 7, dans laquelle le système de pilotage (40) comprend
au moins un capteur de température ambiante (54) configuré pour mesurer la température de l'air ambiant,
au moins un capteur de température de globe noir (53) configuré pour mesurer la température de globe noir locale,
au moins un capteur d'humidité (55) configuré pour mesurer l'humidité relative locale, et
au moins un capteur de vitesse d'air (56) configuré pour mesurer la vitesse du vent locale de l'air.

9. Installation selon l'une quelconque des revendications 1 à 8, dans laquelle tous les capteurs (50) sont disposés dans la zone à rafraîchir (2).

10. Installation selon l'une quelconque des revendications 1 à 9, dans laquelle le système de pilotage (40) est configuré pour commander le système d'alimentation (30) en fonction d'un indice de confort calculé sur la base d'au moins deux paramètres parmi les suivants : température ambiante ; température moyenne de rayonnement ; température du sol ; humidité relative ; vitesse de l'air.

11. Installation selon la revendication 10, dans laquelle ledit indice de confort est l'indice UTCI.

## Patentansprüche

1. Städtische Kühlungsanlage, umfassend eine Oberflächenbeschichtung zur Wasseransammlung (70), die auf Höhe eines zu kühlenden Bereichs (2) angeordnet ist,
ein Wasserverteilungsnetz (60),
ein Wasserversorgungssystem (30), das mit dem Wasserverteilungsnetz (60) verbunden ist,
ein Steuersystem (40), das dazu ausgestaltet ist, das Wasserversorgungssystem (30) zu steuern, um die Wasserversorgung des Wasserverteilungsnetzes (60) zu genehmigen oder zu untersagen,
wobei das Steuersystem (40) mindestens zwei separate Sensoren (50) umfasst, die dazu ausgestaltet sind, zwei verschiedene Klimaparameter der Umgebung der Anlage (1) zu messen, und
**dadurch gekennzeichnet, dass**
das Steuersystem (40) dazu ausgestaltet ist, das Versorgungssystem (30) in Abhängigkeit von der Bodentemperatur in dem zu kühlenden Bereich (2) und von der Bodentemperatur in einem Referenzbereich (3), der frei von einer Oberflächenbeschichtung zur Wasseransammlung ist und an den zu kühlenden Bereich (2) angrenzt, zu steuern.

2. Anlage nach Anspruch 1, wobei die Oberflächenbeschichtung zur Wasseransammlung (70) mehrere Verdampfungsblöcke zur Wasseransammlung (71) umfasst.

3. Anlage nach Anspruch 1 oder 2, wobei das Wasserverteilungsnetz (60) mindestens eine durchlässige Kanalisation (61) umfasst, die unter der Oberflächenbeschichtung zur Wasseransammlung (70) vorgesehen ist.

4. Anlage nach einem der Ansprüche 1 bis 3, umfassend mindestens eine Brauchwasserquelle (10), die mit dem Wasserversorgungssystem (30) verbunden ist, von mindestens einer Art, die aus den Folgenden ausgewählt ist: Regenwasser, Rohwassernetze, Bohrwasser, Grubenwasser, und wiederverwendetes Abwasser.

5. Anlage nach einem der Ansprüche 1 bis 4, wobei das Steuersystem (40) mindestens einen Oberflächentemperatursensor (51) umfasst, der dazu ausgestaltet ist, die Bodenoberflächentemperatur zu messen.

6. Anlage nach Anspruch 5, wobei mindestens ein Oberflächentemperatursensor (51) von der Art eines optischen Pyrometers ist.

7. Anlage nach Anspruch 5 oder 6, wobei das Steuersystem (40) umfasst:
mindestens einen Oberflächentemperatursensor (51), der dazu ausgestaltet ist, die Bodenoberflächentemperatur in dem zu kühlenden Bereich (2) zu messen, und
mindestens einen Oberflächentemperatursensor (52), der dazu ausgestaltet ist, die Bodenoberflächentemperatur in dem Referenzbereich (3) zu messen.

8. Anlage nach einem der Ansprüche 1 bis 7, wobei das Steuersystem (40) umfasst:
mindestens einen Umgebungstemperatursensor (54), der dazu ausgestaltet ist, die Umgebungslufttemperatur zu messen,
mindestens einen Schwarzkugeltemperatursensor (53), der dazu ausgestaltet ist, die lokale Schwarzkugeltemperatur zu messen,
mindestens einen Luftfeuchtigkeitssensor (55), der dazu ausgestaltet ist, die relative lokale Luftfeuchtigkeit zu messen, und
mindestens einen Luftgeschwindigkeitssensor (56), der dazu ausgestaltet ist, die lokale Windgeschwindigkeit der Luft zu messen.

9. Anlage nach einem der Ansprüche 1 bis 8, wobei alle Sensoren (50) in dem zu kühlenden Bereich (2) angeordnet sind.

10. Anlage nach einem der Ansprüche 1 bis 9, wobei das Steuersystem (40) dazu ausgestaltet ist, das Versorgungssystem (30) in Abhängigkeit eines Komfortindex zu steuern, der auf der Grundlage von mindestens zwei Parametern aus den folgenden berechnet wird: Umgebungstemperatur, mittlere Strahlungstemperatur, Bodentemperatur, relative Luftfeuchtigkeit, Luftgeschwindigkeit.

11. Anlage nach Anspruch 10, wobei der Komfortindex der UTCI-Index ist.

## Claims

1. An urban heat relief installation, comprising:
a water-retaining surface coating (70) disposed at an area to be cooled (2),
a water distribution network (60),
a water supply system (30) connected to the water distribution network (60),
a pilot system (40) configured to control the water supply system (30) in order to authorize or prohibit the supply of water to the water distribution network (60),
wherein the pilot system (40) comprises at least two separate sensors (50) configured to measure two different climatic parameters of the environment of the installation (1), and
**characterized in that**
the pilot system (40) is configured to control the supply system (30) as a function of the temperature of the ground in the area to be cooled (2) and of the temperature of the ground in a reference area (3) devoid of the water-retaining surface coating and adjacent to the area to be cooled (2).

2. The installation according to claim 1, wherein the water-retaining surface coating (70) comprises a plurality of water-retaining evaporative paving stones (71).

3. The installation according to claim 1 or 2, wherein the water distribution network (60) comprises at least one permeable pipe (61) provided under the water-retaining surface coating (70).

4. The installation according to any one of claims 1 to 3, comprising at least one non-potable water source (10) connected to the water supply system (30), of at least one type selected among the following types: rainwater, raw water networks, drill water, mine water; and recycled wastewater.

5. The installation according to any one of claims 1 to 4, wherein the pilot system (40) comprises at least one surface temperature sensor (51) configured to measure the ground surface temperature.

6. The installation according to claim 5, wherein at least one surface temperature sensor (51) is of the optical pyrometer type.

7. The installation according to claim 5 or 6, wherein the pilot system (40) comprises:
at least one surface temperature sensor (51) configured to measure the ground surface temperature in the area to be cooled (2), and
at least one surface temperature sensor (52) configured to measure the ground surface temperature in the reference area (3).

8. The installation according to any one of claims 1 to 7, wherein the pilot system (40) comprises:
at least one ambient temperature sensor (54) configured to measure the temperature of the ambient air,
at least one black globe temperature sensor (53) configured to measure the local black globe temperature,
at least one humidity sensor (55) configured to measure the local relative humidity, and
at least one air speed sensor (56) configured to measure the local wind speed of the air.

9. The installation according to any one of claims 1 to 8, wherein all the sensors (50) are disposed in the area to be cooled (2).

10. The installation according to any one of claims 1 to 9, wherein the pilot system (40) is configured to control the supply system (30) as a function of a comfort index calculated based on at least two of the following parameters: ambient temperature; average radiation temperature; ground temperature; relative humidity; air speed.

11. The installation according to claim 10, wherein said comfort index is the UTCI index.
